# EUROPEAN PATENT APPLICATION

(11) **EP 4 795 965 A1**
(43) Date of publication of application: **26.08.2026**
(21) Application number: 26157733.2
(22) Date of filing: 11.02.2026
(51) Int. Cl.: A43B 5/02, A43B 23/02, B29D 35/14

(54) **UPPER FOR A SHOE WITH FUNCTIONAL AND GUIDING ELEMENTS**

(30) Priority: 20.02.2025 DE 102025106537
(71) Applicant: adidas AG, 91074 Herzogenaurach (DE)
(72) Inventor: TARENNE, Baptiste Jacques Dany, 91074 Herzogenaurach (DE); ROEWE, Sven, 91074 Herzogenaurach (DE); ABEL, Rohan, 91074 Herzogenaurach (DE); MUNOZ, Jose, 91074 Herzogenaurach (DE); O DOWD, Harrison Peter, 91074 Herzogenaurach (DE)
(74) Representative: Bardehle Pagenberg Partnerschaft mbB Patentanwälte Rechtsanwälte

(57) **Abstract**

The present disclosure relates to an upper (101) for a shoe, in particular a sports shoe, the upper (101) comprising a ball contact area (140) comprising:
a. one or more functional elements (160);
b. one or more guiding elements (151);
c. wherein one or more of the one or more guiding elements (151) are arranged with respect to one or more of the one or more functional elements (160) such that at least one path (155) is formed configured to at least partially guide a ball upon contact with the ball.

## Description

### 1. Technical field

The present disclosure relates to an upper for a shoe, in particular for a sports shoe. Specifically, the present disclosure pertains to an upper with guiding and functional elements in order to enhance ball control. The present disclosure also relates to a method for manufacturing such an upper through a molding process.

### 2. Prior art

A shoe or generally an article of footwear is commonly described as the combination of an upper and a sole structure. Typically, the upper covers regions such as the instep, the toe, the medial side, the lateral side, and the heel of a wearer's foot and provides an opening to allow the wearer to step inside the footwear. The sole is connected to the upper such that its top side faces the foot, and its bottom side touches the ground during ordinary use of the shoe.

The upper for a shoe generally provides a number of functionalities. The upper provides an enclosure for receiving the foot, stabilizes the foot during movements, protect the foot against the environment, and, in case of certain sport shoes, provides a surface specifically adapted to the needs of the athlete. Particularly athletic footwear should be comfortable to wear, stabilize the foot, support the athlete in any kind of performance aspects like, e.g., acceleration and attenuate the stress from the bounce between the foot and the ground when doing exercises. The footwear should support movements and should avoid physical injury of the wearer.

Particularly uppers for shoes used in athletic activities such as soccer, rugby, football and other ball sports are widely used and are popular among wearers. Such uppers are becoming more and more important and have specific requirements in order to improve performing such athletic activities.

It is common to design the upper part of the shoe with various elements to enhance ball control and overall performance. Known systems typically involve the integration of different materials and textures to improve grip and control. For instance, some shoes incorporate rubberized areas or textured surfaces to increase friction between the shoe and the ball. Additionally, various methods have been employed to attach these elements to the shoe, such as stitching, gluing, or molding. Despite these efforts, achieving optimal ball control and precision during play remains a challenge.

According to known approaches, the placement and design of functional elements on the shoe's upper are helpful for enhancing performance. However, these elements often lack the necessary possibility in controlling the ball's trajectory upon contact. This can result in inconsistent ball handling, affecting the player's ability to shoot, pass, or dribble accurately. Furthermore, the integration of these elements into the shoe's upper can be complex and costly, involving multiple steps and materials that may compromise the shoe's durability and overall performance.

Exemplarily, the following prior art documents may be mentioned in the context of the present disclosure.

US 11 457 689 B2 concerns a sports shoe with a pattern facilitating ball handling, wherein the surface of the upper of the sports shoe is divided into a plurality of shooting zones, and at least one of said shooting zones comprises a plurality of parts that extend out from the basic surface (21) of the upper and having elevated outer surfaces (22) that have increased grip to the ball, and these parts are spaced from each other and designed as directing isles (20) that have elongated shapes.

WO 2010/ 055 276 A1 relates to a ball control component for a sports boot or accessory comprising a three- layered composite of synthetic, rubber like material including a ball contact layer, a middle layer and a base layer wherein the base layer has the highest

US 11 950 659 B2 relates to a shoe with a striped pattern facilitating ball handling, having an upper and a sole, wherein the surface of the upper of the sports shoe is divided into a plurality of shooting zones, namely at least into a nose zone (14), an inner shooting zone (15) and an outer shooting zone (16) and at least one of the shooting zones (14, 15, 16) comprises a plurality of ball directing stripes (20) arranged side-by-side beside and being spaced from each other and the directing stripes extend out from the surface of the upper that constitutes a basic surface (17).

Furthermore, the following prior art may be mentioned for background knowledge.

Document DE 10 2020 205 893 A1, document DE 10 2023 206 175 A1, and document DE 10 2012 207 300 A1.

Despite the substantial advances in the field of sports footwear, there remains a need for improved shoes that offer better ball control and precision. Current solutions do not adequately address the need for a more efficient and effective way to control the ball upon contact. Additionally, there is a need for a more streamlined manufacturing process that can integrate parts of an upper to the upper without compromising its structural integrity or increasing production costs.

It is therefore a technical problem underlying the present invention to provide an upper for a shoe that at least partially overcomes the disadvantages of known systems.

### 3. Summary of the invention

The above-mentioned objects are at least partially achieved by the subject-matter of the independent claims. Preferred embodiments are subject of the dependent claims, and other suitable aspects of the present invention are described through the overall disclosure of the present application.

The headings provided in the present disclosure are included solely for the purpose of facilitating readability and maintaining an overview. These headings are not intended to limit the scope of the disclosure, nor do they preclude the combination of features from the respective embodiments.

### Upper

In a first aspect, the objects are solved by an upper for a shoe, in particular a sports shoe, such as a soccer shoe, the upper comprising a ball contact area comprising: a. one or more functional elements; b. one or more guiding elements; c. wherein one or more of the one or more guiding elements are arranged with respect to one or more of the one or more functional elements such that at least one path is formed configured to at least partially guide a ball upon contact with the ball.

In this manner, the upper provides synergistic enhancement of both design and functionality.

The integration of the functional elements in combination with the guiding elements provides a tangible performance benefit by improving ball control during play. Moreover, it creates a dynamic and distinctive surface pattern, which improves ball control. The prior art thus far has only focused on improved grip, but the guidance of the ball upon ball contact is a major factor that influences overall ball control. By having a predetermined travel trajectory of the ball, the benefit of the functional elements comes even more into play, which is unprecedented in existing approaches.

Particularly, by combining these functionalities, the upper is engineered to optimize the interaction between the player's foot and the ball, allowing for more controlled and accurate maneuvers. This integration results in a footwear innovation that addresses both the practical demands of high-performance sports and the aesthetic preferences of the user, offering a competitive advantage on the field.

The ball contact area may be a region, portion, surface part or the like that can get in contact with an object, such as a ball or the like. In particular, the ball contact area may be the area, which gets in contact with the ball during shooting. As understood, due to the deformation of a ball during shooting, the ball contact area could be larger than the area covered if the ball merely rests on the upper without shooting.

This ball contact area comprises one or more functional elements and one or more guiding elements.

The one or more functional elements may be components that may provide specific benefits or enhancements to the shoe's performance, such as increased grip or control when the ball makes contact with the shoe.

The one or more guiding elements may be positioned in relation to the one or more functional elements to create at least one path. This path is configured to help direct or influence the movement of the ball when it comes into contact with the shoe.

The arrangement of these elements provides an advantage by potentially improving the user's ability to control the ball, enhancing performance in sports activities where ball handling is crucial.

The ball contact area described in here may serve any kind of ball control features, including but not limited to kicking the ball (i.e., shooting, and/or passes), and soft ball touches, such as dribbling, first touch and/or short distance passing. As understood, different prerequisites are required for different shots, which can be accounted for by appropriate construction of the functional elements.

Moreover, the upper as disclosed herein is particularly designed to accommodate shots, such as kicks that are executed with greater force compared to other types of kicks, such as passes. While individual variations in playing style may exist, a person skilled in the art can readily distinguish between shots and other types of kicks, such as passes. Shots frequently occur during gameplay, with the medial and top surfaces of the first metatarsal joint and bone portions being predominantly used for ball contact. Specifically, the foot may be tilted laterally during such actions, causing the ball, upon impact, to travel along the surface in a lateral posterior direction.

Further, also flat passes, short distance passes, dribbling, soft passes or the like are encompassed by the upper of the present disclosure. As understood, such ball contacts entail different travel trajectories of the ball.

It is appreciated that the upper for a shoe described in here is beneficial for any kind of ball contacts, specifically any kind of the afore-mentioned kicks, passes and the like, thus overcoming disadvantages of the prior art.

The upper disclosed in here may be particularly useful in conjunction with a sports shoe, such as a soccer shoe. However, it should be noted that the upper could be used substantially with any kind of article of footwear including, but not limited to football shoes, hiking boots, sneakers, basketball shoes, rugby shoes, baseball shoes, golf shoes, tennis shoes, cross-training shoes. Moreover, the upper may be used in conjunction with shoes for any kind of athletic activity. The term athletic activity is to be understood such that it encompasses one or more and / or any combination of at least the following non-exhaustive list: aerobics, athletic exercises, running, hiking, climbing, group fitness classes, walking, cycling, yoga, soccer, tennis, football, basketball, doing a workout, volleyball, gymnastics, weightlifting, cross-training, baseball, softball, rugby, field hockey, wrestling, squash, track and field (such as sprinting, long jump, high jump), cross-country skiing.

### Functional elements and path

In a preferred embodiment of the upper as described in here, one or more, preferably each functional element of the one or more functional elements are raised with respect to the ball contact area.

This may bring an enhancement to the upper by providing a distinct topographical differentiation between the functional elements and the remainder of the ball contact area. The raised positioning of the functional elements relative to the ball contact area can improve the interaction between the shoe and the ball. This elevation can create a more pronounced tactile feedback when the ball makes contact with the functional elements, potentially enhancing the player's control over the ball. Additionally, the raised functional elements could contribute to better grip and friction, which might aid in more precise ball handling and maneuvering.

The raised nature of the functional elements can also serve to channel the ball more effectively along the intended path formed by the guiding elements, ensuring that the ball follows a more predictable trajectory upon contact. This feature can be advantageous in sports where ball control and precision are critical.

By elevating the functional elements, the embodiment may also provide a visual and tactile cue to the player, helping them to intuitively understand and utilize the shoe's ball-guiding capabilities. This can enhance the overall performance of the shoe in a sports context.

The raised functional elements not only contribute to the mechanical interaction between the shoe and the ball but also enhance the user's experience by providing better control, feedback, and precision.

In a preferred embodiment of the upper as described in here, one of the one or more guiding elements is arranged between at least two of the functional elements.

This arrangement allows to position the guiding element in such a way that it interacts with multiple functional elements. This configuration potentially enhances the guiding capability of the path formed by the guiding elements, as it allows for a more integrated interaction between the guiding and functional elements.

The guiding element, being situated between two functional elements, may serve to channel or direct the movement of the ball more effectively by leveraging the properties or functions of the adjacent functional elements. This arrangement could provide a more controlled or refined path for the ball, potentially improving the performance characteristics of the shoe in terms of ball control.

The placement of the guiding element between functional elements may also contribute to a more enhanced upper, where the elements work in combination to achieve the desired guiding effect. This embodiment may underscore the importance of spatial arrangement in the design of the upper, highlighting how the relative positioning of components can influence the performance of the shoe. By situating a guiding element between functional elements, the design potentially maximizes the utility of the guiding path, offering a refined solution for directing ball movement in a manner that is responsive to the dynamics of sports play.

In a preferred embodiment of the upper as described in here, comprising two guiding elements arranged next to one of the one or more functional elements to form the at least one path.

This arrangement enhances the guiding capability of the ball contact area. The presence of two guiding elements positioned adjacent to a functional element creates a more defined and controlled path for the ball, potentially improving the precision and effectiveness of ball guidance during contact. This configuration can lead to better performance in sports activities by providing more predictable and reliable ball handling. Having two guiding elements next to a functional element brings a structured and/or deliberate design to the ball contact area. This may ensure that the path formed is essentially consistent and/or optimized for guiding the ball. This can be particularly beneficial in sports shoes where precise ball control is mandated, such as in soccer.

The dual guiding elements work in conjunction with the functional element to create a synergistic effect. This may enhance the overall functionality of the shoe's upper.

This specific arrangement can also contribute to the durability and stability of the ball contact area, as the guiding elements can provide additional support and/or reinforcement to the functional element.

In a preferred embodiment of the upper as described in here, the at least one path has a channel-like shape.

This channel-like shape of the path provides a more defined and structured route for the ball to follow upon contact, enhancing the guiding capability of the upper. The channel-like shape can help in controlling the direction and speed of the ball more precisely, offering improved performance in sports activities where ball control is crucial. This embodiment brings an added level of functionality to the upper by ensuring that the ball is guided in a more predictable and controlled manner, which can be particularly beneficial in sports like soccer where precise ball handling is essential.

The channel-like shape can also contribute to the overall aesthetic design of the shoe, providing a visually distinct element that can be both functional and attractive. Additionally, the channel-like shape may offer structural benefits, potentially improving the durability and stability of the upper by providing a reinforced path for ball contact. This embodiment may enhance the overall use case of the shoe by combining functional performance with design elements that cater to the needs of athletes.

In a preferred embodiment of the upper as described in here, the at least one path accommodates one or more of the one or more functional elements.

This embodiment introduces an improved interaction between the guiding elements and the functional elements within the ball contact area of the shoe upper. The guiding elements, which are responsible for forming the path, thereby have a spatial relationship with the functional elements such that the path itself can house or contain these functional elements.

This suggests a more integrated design where the functional elements are not merely adjacent to or aligned with the guiding elements but are actually incorporated within the path.

This accommodation may mean that the functional elements are positioned in a manner that they are part of the path's structure or layout. This may affect the path's characteristics or the way it interacts with a ball. The path may not just be a route or trajectory for guiding a ball but also a structural feature that includes the functional elements within its bounds. This could enhance the functionality of the shoe upper. This may be reasoned in that the functional elements, which may serve purposes such as enhancing grip, control, or impact absorption, are optimally positioned to interact with a ball during contact.

By being accommodated within the path, the functional elements can directly influence the ball's movement along the path, potentially providing a more controlled or predictable interaction.

This arrangement may also have the adapted benefit in that the functional elements are protected and/or supported by the guiding elements, thereby enhancing durability or performance. Accommodating the functional elements within the path can lead to improved performance characteristics of the shoe upper. This could be particularly advantageous in sports applications where precise control and interaction with a ball are critical.

In a preferred embodiment of the upper as described in here, the at least one path is configured to at least partially guide a ball in a direction in which one or more of the one or more functional elements are arranged.

The alignment of the path with the functional elements may enhance the functionality of the upper by ensuring that the ball is directed towards areas that can influence its behavior. This alignment can improve the control and precision of ball handling, which is particularly beneficial in sports applications where the direction and control of the ball are critical. This arrangement not only defines the existence of a path but also specifies its directional relationship with the functional elements.

This enhances the utility of the upper by ensuring that the path is not arbitrary but is purposefully designed to interact with the functional elements in a way that optimizes the performance of the shoe.

In a preferred embodiment of the upper as described in here, one or more, preferably each functional element of the one or more functional elements are provided to the upper as separate element(s), preferably with a vulcanization process.

The introduction of the functional elements as separate components, rather than being integrated or formed as part of the upper, allows for more precise placement and potentially varied material properties tailored to specific performance needs.

The vulcanization process, a method which may involve the heating of rubber with, e.g., sulfur to improve elasticity and strength, ensures that these separate functional elements are securely and durably attached to the upper. The vulcanization process is described elsewhere in here in greater detail.

This embodiment, specifically this manner of attachment not only enhances the durability of the functional elements but also allows for a more robust and resilient connection to the upper. Thereby, it may improve the overall performance and/or longevity of the shoe. The provision as separate elements may provide for a higher degree of customization and potentially improved performance characteristics due to an enhanced attachment method. This approach can lead to better ball control and guidance, as the functional elements can be strategically placed and securely attached to withstand the rigors of sports activities.

In a preferred embodiment of the upper as described in here, one or more, preferably each guiding element of the one or more guiding elements and the upper are formed integrally.

This integral formation may provide the advantage of a seamless construction where the guiding elements are not separate components attached to the upper but are instead manufactured as a single unit with the upper itself.

This integral formation can be achieved through various manufacturing techniques such as molding, 3D printing, or other advanced fabrication methods that allow for the creation of complex structures in a single process. The guiding elements may not be distinct parts that need to be affixed or aligned with the upper but may be part of the same material matrix.

This structural integration brings several advantages. Firstly, it can enhance the durability and longevity of the shoe by eliminating potential points of failure where separate components might detach or wear out. Secondly, it can improve the aesthetic appeal and streamline the design, as there are no visible seams or attachment points. Thirdly, the integral formation can lead to a reduction in manufacturing complexity and cost, as it simplifies the assembly process and reduces the number of parts that need to be handled. Additionally, this embodiment can contribute to the overall performance of the shoe by ensuring that the guiding elements maintain their intended position and orientation relative to the functional elements, thereby optimizing the path formed to guide the ball upon contact. This precise alignment is helpful for sports applications where consistent performance is required.

Furthermore, the integral formation can offer enhanced flexibility and comfort, as there may be no attachment means, such as rigid attachment means that might impede the natural movement of the foot.

In a preferred embodiment of the upper as described in here, one or more, preferably each functional element of the one or more functional elements and one or more, preferably each guiding element of the one or more guiding elements are formed integrally.

This integral formation implies that the functional and guiding elements are manufactured as a single, unified piece rather than being separate components that are subsequently assembled. The respective advantages are set out elsewhere herein, in particular in the foregoing embodiment and apply to this embodiment as well.

In a preferred embodiment of the upper as described in here, the one or more functional elements and the one or more guiding elements are formed in one mold, preferably in a single step.

This manufacturing approach entails an integrated production process where both the functional and guiding elements are created essentially simultaneously, which could enhance the structural integrity and uniformity of the shoe upper. By forming these elements in one mold, the process likely ensures precise alignment and positioning relative to each other, which is crucial for the intended function of guiding a ball upon contact.

The spatial relationship and interaction between the functional and guiding elements may be essentially predetermined and fixed during the molding process. This may reduce variability and inconsistencies that might arise from separate manufacturing steps. Forming these elements in one mold, and preferably in a single step, brings several advantages. It likely streamlines the manufacturing process, reducing the time and cost associated with assembling multiple components. This method may also enhance the durability and performance of the shoe upper by minimizing seams or joints that could weaken the structure or affect the ball contact area's functionality. Additionally, this integrated molding process could allow for more complex designs or configurations of the functional and guiding elements, as the constraints of separate assembly are removed.

The single-step molding process might also contribute to better material utilization and waste reduction, as the elements are formed together rather than being cut or shaped separately and then joined.

Overall, this embodiment could lead to improved product quality and efficiency. The integrated molding approach enhances the practical implementation of these features by ensuring that the elements are precisely and consistently formed and positioned.

In a preferred embodiment of the upper as described in here, the one or more functional elements are configured to assist with ball control, in particular with shooting and/or passing a ball upon contact with the ball.

As described elsewhere herein, the guiding elements may be positioned in such a way that they work in tandem with the functional elements to direct the ball along a predetermined path when the ball makes contact with the shoe's upper. This arrangement may ensure that the ball follows a controlled trajectory, enhancing the player's ability to manage the ball's movement.

The functional element being configured to assist with ball control, particularly in shooting and passing scenarios may mean that the functional elements are not just passive components but may be actively designed to improve the player's performance by providing better control over the ball during critical actions such as shooting and passing.

The dimensions and shapes of these functional elements may be optimized to enhance their effectiveness in controlling the ball. This could involve specific textures, materials, or structural designs that increase friction or provide better grip on the ball, thereby improving accuracy and precision in ball handling.

By focusing on ball control, the upper enhances the player's ability to execute precise movements, making it a valuable enhancement for sports shoes where ball handling is crucial. This configuration not only improves the player's technical skills but also contributes to overall game performance by enabling more accurate and controlled ball movements.

### Dimensions and shapes

In a preferred embodiment of the upper as described in here, one or more of the one or more guiding elements have the shape of ribs, preferably longitudinal ribs.

The rib shape, particularly when the rib shape is longitudinal, offers a structured and/or directional surface that can influence the trajectory of the ball more predictably. The ribbed configuration enhances the guiding capability by providing a physical contour that can channel the ball along a predetermined path. This is particularly useful in sports shoes where control over the ball's movement is needed.

The longitudinal orientation of the ribs can align with the intended direction of the ball's movement, offering a more seamless and controlled interaction. This embodiment enhances the guiding elements by not only serving as a passive surface but also actively directing the ball's path through its shape and orientation.

The introduction of ribs, especially longitudinal ones, can also contribute to the tactile and aesthetic aspects of the shoe, potentially offering a better grip and feel for the player. The ribbed structure may also enhance the durability of the guiding elements by distributing the impact forces more evenly across the surface, reducing wear and tear. This design can be particularly advantageous in high-performance sports shoes where precision and durability are paramount.

Furthermore, the ribbed guiding elements can be integrated with the functional elements to create a cohesive system that enhances the overall performance of the shoe. However, also a separate arrangement of the one or more ribs and the functional elements is envisaged and particularly advantageous as it offers improved flexibility. Moreover, this allows to tailor the distribution pattern of one or more ribs and one or more functional elements according to specific needs in, e.g., the kind of sport in which the upper is to be used.

By focusing on the shape and orientation of the guiding elements, this embodiment allows for a more refined and effective interaction with the ball, potentially improving the user's control and accuracy during play.

In a preferred embodiment of the upper as described in here, one or more of the one or more guiding elements has a length substantially perpendicularly to a height, wherein the length is at least 20%, preferably at least 40%, preferably at least 60%, preferably at least 80%, preferably at least 100%, preferably at least 150%, preferably at least 200% or more of the length of a neighboring functional element.

This proportional relationship ensures that the guiding elements are of a sufficient length to effectively interact with the functional elements, thereby enhancing the ball-guiding capability of the upper. This may have the advantage of a precise dimensional relationship between the guiding elements and the functional elements, which optimizes the path formation for guiding the ball.

By specifying these lengths in here, it can be ensured that the guiding elements are neither too short to be ineffective nor excessively long to interfere with other functionalities of the shoe. This proportional length relationship enhances the overall performance of the shoe by improving ball control and guidance, which is particularly beneficial in sports applications where precise ball handling is needed. The incremental preference for the length percentage, ranging from at least 20% to 200% or more, provides flexibility in design. Moreover, it may allow for customization based on specific performance requirements. This specification of the guiding elements' length relative to the functional elements may ensure that the upper can be tailored to meet various athletic needs, thereby offering a significant improvement in the functionality of sports shoes.

It is understood by the skilled person that the length (and/or the width mentioned elsewhere herein) may be parallel, e.g., in line with respect to the upper. In this manner, the length (and/or the width mentioned elsewhere herein) may be distinguished from, e.g., the height, which is a normal to the upper.

In a preferred embodiment of the upper as described in here, one or more, preferably each functional element of the one or more functional elements has a height of at least 0.1 mm, preferably at least 0.2 mm, preferably at least 0.3 mm, preferably at least 0.4 mm; and/or of at most 4.0 mm, preferably at most 3.5 mm, preferably at most 3.0 mm, preferably at most 2.5 mm.

This embodiment introduces specific dimensions for the functional elements which improve the upper's performance. One or more of the functional elements has a minimum height of at least 0.1 mm, with preferred minimum heights of at least 0.2 mm, 0.3 mm, and 0.4 mm. Additionally, this embodiment sets a maximum height for these functional elements at 4.0 mm, with preferred maximum heights of 3.5 mm, 3.0 mm, and 2.5 mm. These dimensional constraints on the functional elements are helpful as they influence the interaction between the shoe upper and the ball.

The specified height range ensures that the functional elements are prominent enough to interact effectively with the ball, thereby enhancing the ball control and guidance capability of the shoe upper.

By defining the height of the functional elements, this embodiment ensures that these elements are sufficiently raised to engage with the ball while maintaining a balance that prevents them from being excessively protrusive, which could hinder performance or comfort. This contributes to the overall functionality of the shoe upper by optimizing the interaction between the shoe and the ball, enhancing the player's control over the ball during play. These height specifications also ensure consistency in the manufacturing process, providing a standard that can be replicated to achieve the desired performance characteristics in each shoe produced. The careful calibration of the functional elements' height is a critical aspect that enhances the guiding capability of the shoe upper, making it a significant improvement in the design and functionality of sports shoes.

Specifically, the height of the one or more functional elements should not be too large as this may require more material and may lead to a bulky construction of the upper. A smaller height of the one or more functional elements may contribute to a more minimalistic construction of the upper. This has the advantage that the one or more functional elements may not act like a large foreign part or object on the upper. Rather, the one or more functional elements may be smoothly integrated to the upper, which is appreciated by the wearer. Further, material usage can thereby be reduced, which has economic and ecological advantages. Therefore, an upper limit to the height of the one or more functional elements should be provided.

Nevertheless, the height of the one or more functional elements should have at least a minimum value such that the advantages of the one or more functional elements become apparent.

Thus, without wishing to be bound by theory, it is believed that an optimal balance between these conflicting requirements can be struck according to the values as specified in here.

In a preferred embodiment of the upper as described in here, one or more, preferably each guiding element of the one or more guiding elements has a height that is greater than or equal to a height of the one or more functional elements.

This embodiment enhances the structural and functional dynamics of the shoe's upper. The guiding elements, by having a height that meets or exceeds that of the functional elements, may serve to create a more pronounced path for guiding a ball upon contact. This configuration can potentially improve the control and directionality imparted to the ball, as the elevated guiding elements can act as barriers or channels that influence the ball's trajectory.

The guiding elements, due to their relative height, can interact more prominently with the ball, thereby affecting the ball's movement in a more controlled manner. This arrangement may also contribute to the overall durability and performance of the shoe's upper by providing additional structural support to the functional elements.

The guiding elements, having a height that meets or exceeds that of the functional elements, could also enhance the tactile feedback experienced by the wearer, as the interaction with the ball might be more pronounced.

Moreover, this embodiment could potentially influence the aesthetic design of the shoe, as the relative heights of the guiding and functional elements might create a distinctive visual pattern or texture on the shoe's surface.

In a preferred embodiment of the upper as described in here, one or more, preferably each guiding element of the one or more guiding elements has a height of at least 0.1 mm, preferably at least 0.2 mm, preferably at least 0.3 mm, preferably at least 0.4 mm; and/or of at most 5.0 mm, preferably at most 4.5 mm, preferably at most 4.0 mm, preferably at most 3.5 mm.

This embodiment introduces specific dimensions for the guiding elements which improve the upper's performance. It specifies that each guiding element has a height of at least 0.1 mm, with preferred minimum heights of 0.2 mm, 0.3 mm, and 0.4 mm. Additionally, the guiding elements have a maximum height of 5.0 mm, with preferred maximum heights of 4.5 mm, 4.0 mm, and 3.5 mm.

These dimensional specifications provide a range for the height of the guiding elements, ensuring that they are neither too small to be ineffective nor too large to interfere with the functionality of the shoe.

The specific height ranges contribute to the overall performance of the shoe by optimizing the interaction between the ball contact area and the ball. This ensures that the guiding elements are capable of effectively guiding the ball along the intended path while maintaining the structural integrity and comfort of the shoe. The introduction of these height specifications enhances the predictability and reliability of the ball guidance mechanism, providing a more consistent performance during use.

By these heights, the design can accommodate various ball sizes and types, making the shoe versatile for different sports and playing conditions. The precise height ranges also facilitate manufacturing consistency, allowing for better quality control and uniformity in production. This ensures that each shoe produced meets the desired performance standards, providing athletes with a reliable and high-performing product.

The defined height ranges for the guiding elements also contribute to the aesthetic design of the shoe, allowing for a sleek and functional appearance that appeals to consumers.

### Arrangements

In a preferred embodiment of the upper as described in here, the one or more functional elements and/or the one or more guiding elements are arranged at least partially: in a medial toe portion, a medial metatarsal portion, a medial distal tarsal portion, a lateral toe portion, a lateral meta-tarsal portion, a lateral distal tarsal portion, an intermediate toe portion, an intermediate metatarsal portion, and/or an intermediate distal tarsal portion of the upper.

This arrangement allows for a more tailored and precise placement of the one or more guiding elements and/or the one or more functional elements, enhancing the shoe's ability to control and guide the ball during contact.

By these particular regions, a detailed framework for optimizing the interaction between the shoe and the ball is provided, potentially improving the performance of the shoe in sports applications. This enables a more customized and effective design of the upper, ensuring that the guiding and functional elements are strategically placed to maximize their utility and effectiveness in guiding the ball. This detailed arrangement allows for a more refined and targeted approach to designing the shoe's upper, potentially leading to better ball control and overall performance in sports activities.

The specific placement of the elements in various portions of the upper ensures that the shoe can cater to different aspects of ball contact and movement, providing a comprehensive solution for enhancing ball guidance and control. Specifically, this distribution can lead to a more balanced and effective interaction with the ball, thereby improving the overall performance of the athlete.

In a preferred embodiment of the upper as described in here, the one or more functional elements comprise two neighboring functional elements spaced apart from one another by at least 1 mm, preferably at least 2 mm, preferably at least 3 mm, preferably at least 4 mm, preferably at least 5 mm, preferably at least 6 mm, preferably at least 7 mm, preferably at least 8 mm, preferably at least 9 mm, preferably at least 10 mm, and/or by at most 20 mm, preferably at most 19 mm, preferably at most 18 mm, preferably at most 17 mm, preferably at most 16 mm, preferably at most 15 mm, preferably at most 14 mm, preferably at most 13 mm, preferably at most 12 mm, preferably at most 11 mm, preferably at most 10 mm.

This embodiment introduces a precise and adjustable configuration for the functional elements, which can influence the interaction between the shoe and the ball. The specific spacing between the functional elements can affect how the ball is controlled, potentially enhancing the player's ability to manipulate the ball's trajectory and speed.

By defining a range of spacing, this embodiment allows for customization and optimization of the shoe's performance characteristics, catering to different playing styles or preferences.

Moreover, it allows for a tailored design that can be adjusted to achieve desired outcomes in ball control and guidance. This embodiment can be particularly advantageous in sports where precision and control over the ball are critical. By specifying both minimum and maximum distances, this embodiment provides flexibility in design while maintaining a structured framework that ensures the functional elements remain effective in their role.

Overall, fine-tuning of the interaction between the shoe and the ball can be achieved, potentially leading to improved performance and user satisfaction.

In a preferred embodiment of the upper as described in here, the functional elements are arranged in a predefined pattern.

This predefined pattern has the advantage of introducing predictability and consistency to the performance of the upper. By arranging the functional elements in a specific, predetermined manner, the design can optimize the interaction between the ball and the upper, leading to improved control and effectiveness in guiding the ball.

This structured arrangement can also contribute to the aesthetic appeal of the shoe, providing a visually recognizable pattern that can be associated with performance benefits.

Additionally, the predefined pattern can be tailored to different types of sports or playing styles, offering customization options that cater to the specific needs of athletes. This embodiment enhances the overall functionality of the upper by ensuring that the functional elements are not randomly placed but are instead systematically organized to achieve the desired guiding effect on the ball.

In a preferred embodiment of the upper as described in here, the functional elements are arranged in one, two, preferably three rows.

This arrangement introduces a structured and organized configuration of the functional elements, which can enhance the performance characteristics of the shoe's upper. By arranging the functional elements in rows, the embodiment ensures a systematic and potentially more effective interaction between the ball and the shoe. The rows can provide a more predictable and controlled path for the ball, improving the accuracy and consistency of ball handling. Additionally, the specific arrangement in rows can offer a visually pleasing and professional look. The communication between the components, namely the functional elements and the guiding elements, is facilitated through their spatial arrangement.

The guiding elements can be strategically positioned relative to the functional elements to create defined paths for the ball. This spatial relationship ensures that the guiding elements effectively channel the ball along the intended paths, leveraging the placement of the functional elements to optimize ball control.

In a preferred embodiment of the upper as described in here, one or more of the rows comprise at least two, preferably at least three, preferably at least four, preferably at least five, preferably at least six functional elements.

This configuration enhances the complexity and functionality of the ball contact area by increasing the number of functional elements within each row. The communication between components in this context refers to the spatial and functional relationship between the guiding elements and the functional elements. By this number of functional elements in a row, a more intricate interaction between these elements may be ensured, potentially leading to more precise control over the ball's movement upon contact.

The guiding elements, by virtue of their arrangement with respect to the functional elements, form paths that can influence the trajectory of the ball. The increase in the number of functional elements per row can provide a denser configuration, which can enhance the upper's ability to interact with the ball in a controlled manner.

In a preferred embodiment of the upper as described in here, one or more of the rows have a curved shape.

This curved shape of the rows enhances the functionality of the upper by potentially improving the guidance of the ball along the intended path. The curvature can provide a more controlled and/or precise direction for the ball, which can be beneficial in sports where ball control is required. This design can help in achieving a more predictable and consistent interaction between the ball and the shoe, thereby improving the performance of the athlete. Additionally, the curvature might offer ergonomic benefits, such as better fit and comfort for the wearer, as it can conform more naturally to the shape of the foot.

This embodiment can also enhance the durability of the upper by distributing stress more evenly across the surface, potentially reducing wear and tear over time.

### Microstructure surface

In a preferred embodiment of the upper as described in here, one or more of the one or more functional elements comprises a microstructure surface, preferably arranged on a top surface of the functional element.

The introduction of the microstructure surface on the functional element enhances the interaction between the ball and the shoe's upper by providing a textured and/or patterned surface that can influence the ball's movement and control.

The microstructure surface can improve grip, friction, and overall control when the ball makes contact with the shoe, thereby enhancing the player's performance. This embodiment brings an added benefit to the functional elements by not only guiding the ball through the path formed by the guiding elements but also by actively engaging with the ball through the microstructure surface.

This dual interaction can result in more precise ball handling and improved accuracy in ball direction. The microstructure surface can be implemented in various patterns and/or textures. Each of these may contribute to different aspects of ball control, such as spin, speed, and/or trajectory.

By incorporating this microstructure surface, the functional elements become more versatile and effective in their role within the ball contact area. This may provide a more comprehensive solution for guiding and controlling the ball during play. This may underscore the importance of surface design in sports equipment, where even minor modifications can lead to significant improvements in performance and user experience.

In a preferred embodiment of the upper as described in here, the microstructure surface comprises a plurality of protrusions.

The protrusions on the microstructure surface provide additional texture and surface variation, which can influence the frictional properties of the ball contact area. This interaction can enhance the grip and control over the ball, providing a more precise and controlled path for the ball to follow upon contact. The presence of protrusions can also contribute to the tactile feedback experienced by the user. This may facilitate a more intuitive and responsive interaction with the ball.

Having a plurality of protrusions on the microstructure surface brings several advantages. It enhances the overall functionality of the shoe upper by improving the ball control capabilities, which is helpful for sports shoes where precision and control are paramount. The protrusions can be provided in various shapes, sizes, and patterns. They may be provided to optimize the interaction with the ball, potentially allowing for customization based on specific sports or user preferences. This may add versatility to the shoe upper, as it can be adapted to different playing conditions or surfaces.

The protrusions may be integrated into the microstructure surface. The protrusion may be uniformly distributed across the microstructure surface. The protrusions may allow for a consistent and stable configuration that enhances the overall functionality of the upper of the shoe.

In a preferred embodiment of the upper as described in here, the ball contact area is configured to assist with shooting and/or passing a ball in that each protrusion of the plurality of protrusions is elastically bendable.

For instance, they may be elastically bendable such that each protrusion of the plurality of protrusions is configured to bend substantially upon contact with the ball.

This elastic bendability may ensure that the protrusions can deform upon contact with the ball, providing a more controlled and precise ball handling experience.

The configuration of each protrusion to bend substantially upon contact with the ball introduces a new level of adaptability and responsiveness to the shoe's upper. This bending allows the protrusions to absorb and redistribute the force exerted by the ball, thereby enhancing the player's control over the ball during shooting and passing maneuvers.

The specific shape and elastic properties of the protrusions may work in tandem to create a surface that not only grips the ball effectively but also adapts to the varying forces encountered during gameplay.

In various examples, each protrusion may be configured to bend substantially around a root point of each protrusion on the microstructure surface.

In a preferred embodiment of the upper as described in here, each protrusion of the plurality of protrusions has the shape of a pillar.

The pillar shape of each protrusion is particularly advantageous as it may provide a uniform response to force applied during ball contact. This may result in a more predictable and accurate ball trajectory. The pillar shape of each protrusion may ensure a uniform response to, e.g., external forces, such as the impact from a ball. This shape may be beneficial for the elastic bending mechanism, as it may provide a consistent deformation pattern. It is to note that the pillar shape is to be distinguished in some examples from, e.g., elongated shapes as usually employed in the prior art. These elongated shapes have an elongated axis that follows the surface of the upper. By contrast, a pillar shape may not necessarily have such an elongated axis that follows the surface of the upper.

In a preferred embodiment of the upper as described in here, the microstructure surface comprises a thermoset elastomer, preferably polyurethane, PU, rubber and/or silicone, and/or the microstructure surface comprises a thermoplastic elastomer, preferably thermoplastic polyurethane, TPU, polyamide, PA, thermoplastic polyether block amide, PEBA, and/or thermoplastic polyester elastomer, TPEE.

The inclusion of materials such as polyurethane, rubber, silicone, thermoplastic polyurethane, polyamide, thermoplastic polyether block amide and thermoplastic polyester elastomer introduces specific mechanisms of communication between the components of the microstructure surface and the ball contact area. These materials are known for their unique properties, such as flexibility, durability, and elasticity, which enhance the performance characteristics of the upper.

In a preferred embodiment of the upper as described in here, each protrusion of the plurality of protrusions comprises a Shore A hardness of 30 to 110 Shore A, preferably 50 to 100 Shore A, more preferably 70 to 90 Shore A.

The Shore A hardness as specified in this embodiment may provide advantages in terms of bending of the protrusions and a respective restoring force once the protrusions are bent. In turn, this may give additional benefits in assisting call control.

Moreover, this Shore A hardness ensures a smoother transition for shots (e.g., compared to rather hard geometries known in the prior art). This was found to be particularly advantageous for shots as well as for passing.

This embodiment refines the hardness by stating that each protrusion preferably comprises a Shore A hardness of 50 to 100 Shore A. This narrower range further fine-tunes the material properties, enhancing the shoe's ability to assist with shooting and passing a ball by providing a more consistent and reliable interaction between the ball and the microstructure surface.

Even more preferably, each protrusion comprises a Shore A hardness of 70 to 90 Shore A. This may ensure that the protrusions are optimally balanced in terms of hardness and elasticity, providing an improved performance for the intended use in sports activities.

### Material, grip, and shapes

In a preferred embodiment of the upper as described in here, one or more, preferably each functional element of the one or more functional elements comprises a material configured to enhance a grip between a ball and the functional element upon contact.

This enhancement of grip is helpful as it essentially directly affects the performance of the shoe during activities involving ball handling, such as in various sports. The material used in the functional elements is specifically chosen and/or treated to increase friction or adhesion when it comes into contact with the ball.

This brings an advantage in sports where ball control is essential, as it allows for better handling, dribbling, and shooting by providing a more secure and/or reliable interaction between the shoe and the ball.

The enhanced grip can be achieved through various means, such as using materials with higher friction coefficients, incorporating textures and/or patterns that increase surface roughness, or applying coatings that improve adhesion.

This improvement in grip not only enhances the player's performance but also contributes to the overall functionality and desirability of the shoe. By ensuring that each functional element is configured to enhance grip, the design ensures consistency and reliability across the ball contact area. This may provide a uniform performance characteristic that can be relied upon during play.

This embodiment is particularly beneficial in high-intensity sports where quick and precise movements are required, and any slip or loss of control may have consequences. Therefore, the inclusion of materials configured to enhance grip in the functional elements represents an advancement in the functionality of sports shoes.

In a preferred embodiment of the upper as described in here, one or more, preferably each functional element of the one or more functional elements comprises a thermoset elastomer, preferably rubber, in particular a super light rubber, such as polyurethane rubber, preferably polyurethane foam rubber, natural rubber, silicone rubber preferably silicone foam rubber.

The use of a thermoset elastomer, such as rubber, and more specifically, a super light rubber like polyurethane rubber, polyurethane foam rubber, natural rubber, or silicone rubber, particularly silicone foam rubber, may enhance the durability, flexibility, and/or weight characteristics of the functional elements. These materials have improved elasticity, resilience, and/or ability to return to their original shape after deformation. This is helpful for maintaining the integrity and functionality of the shoe upper during use.

In a preferred embodiment of the upper as described in here, one or more of the one or more functional elements has essentially the shape of a diamond, parallelogram, kite, rectangle, square, trapezoid, deltoid, lozenge.

This geometric specification may enhance the precision and predictability of the ball's interaction with the shoe's upper. These shapes can influence the manner in which the ball is guided along the path formed by the guiding elements.

For instance, a diamond or lozenge shape may provide multiple angles of contact, potentially altering the ball's trajectory in a controlled manner.

Shapes like rectangles and squares might offer more uniform contact surfaces, leading to a more predictable and consistent ball guidance.

Shapes such as parallelograms and trapezoids can introduce varying degrees of angularity, which can be strategically utilized to affect the ball's spin or speed upon contact.

The kite and deltoid shapes, with their unique symmetry and angles, can offer distinct advantages in terms of ball control and maneuverability.

These geometric configurations can also affect the durability and performance of the functional elements, as different shapes may distribute stress and wear differently across the upper.

### Shoe

In a further aspect, the objects are solved by a shoe, in particular a sports shoe, the shoe comprising: an upper according to any one of the aspects / embodiments described herein; and a sole attached to the upper.

It goes without saying that the technical properties shown or described for the upper, the advantages and the improvements over the state of the art are likewise applicable to the shoe, in particular the sports shoe.

The upper may be attached to the sole by any kind of suitable means of attachment. As understood by the skilled person, attaching the upper of a shoe to the sole may involve various methods and techniques depending on the type of shoe, the materials used, and /or the desired level of durability and robustness of the upper. For instance, attaching may include cementing / adhesive bonding, which is a common method, in which for instance a strong adhesive is applied to one or both of the upper and the sole. Subsequently, they may be pressed together and allowed to bond.

### Method

In a further aspect, the objects are solved by a method for manufacturing an upper for a shoe, in particular for a sports shoe, such as a soccer shoe, the method comprising: a. providing a mold; b. arranging an initial upper into the mold; c. heating the mold to expose the initial upper with a heat treatment; d. pressing the initial upper at least partially to provide one or more guiding elements; e. initiating a vulcanization process in the mold to provide one or more functional elements to form the upper.

The method comprises providing a mold, which serves as the framework for shaping the upper. An initial upper, which may be the preliminary form of the shoe's upper part, is then arranged into this mold. The mold is subsequently heated, subjecting the initial upper to a heat treatment. This heating process may be helpful as it prepares the material, e.g., for further manipulation.

During or following the heating, the initial upper is pressed at least partially within the mold. In case of subsequent operations, the initial heated upper is pressed at least partially within the mold. The steps may be performed simultaneously or at least partially overlapping. This pressing action creates one or more guiding elements on the upper. The guiding elements are described elsewhere herein in greater detail.

Moreover, the method involves initiating a vulcanization process within the mold. Said vulcanization is described elsewhere herein in greater detail.

For instance, it may be a chemical process that enhances the durability and elasticity of the material. During this process, one or more functional elements are formed on the upper. These functional elements contribute to the performance characteristics of the shoe, such as flexibility, strength, and comfort.

The advantages of this method may include a precise and controlled manufacturing process that ensures the upper part of the shoe is both functional and durable. Specifically, the method has the advantage that the upper can be essentially manufactured within one mold without the need for more complex arrangements. This is due to the combination of pressing and the initiation of vulcanization.

Moreover, the use of heat treatment and vulcanization enhances the material properties, making the shoe suitable for the rigorous demands of sports activities. Additionally, the creation of guiding and functional elements during the manufacturing process ensures that the final product meets specific design and performance criteria.

In a preferred embodiment of the method as described in here, the steps c and d, c and e, d and e, or c, d and e are performed essentially simultaneously.

In a preferred embodiment of the method as described in here, the upper is an upper as described elsewhere herein, in particular in terms of the first aspect.

In a further aspect, the objects are solved by an upper for a shoe, in particular for a sports shoe, such as a soccer shoe, the upper being manufactured according to the method as described in here.

### 4. Brief description of the figures

In the following, the invention will be described in more detail with reference to the following figures:
- Fig. 1:: shows an exemplary shoe, in particular a sports shoe, with an upper according to an embodiment of the present disclosure.
- Fig. 2:: shows the embodiment of Fig. 1 in a different perspective.
- Fig. 3:: shows the embodiment of Fig. 1 in a close up shot.
- Fig. 4:: shows a schematic figure of an exemplary upper, in particular of the functional elements and guiding elements of the exemplary upper along with their height profile, according to an embodiment of the present disclosure.
- Fig. 5:: shows an exemplary upper for a shoe, in particular a sports shoe, in a not finalized state of manufacturing, according to an embodiment of the present disclosure.
- Fig. 6:: shows the embodiment in Fig. 5 in yet a different state of manufacturing.
- Fig. 7:: shows a flow chart of an exemplary method for manufacturing an upper for a shoe, in particular for a sports shoe, such as a soccer shoe, according to an embodiment of the present disclosure.

### 5. Detailed description of the preferred embodiments

In the following only some possible embodiments of the invention are described in detail. However, the present invention is not limited to these, and a multitude of other embodiments are applicable without departing from the scope of the invention. The presented embodiments can be modified in a number of ways and combined with each other whenever compatible and certain features may be omitted in so far as they appear dispensable. In particular, the disclosed embodiments may be modified by combining certain features of one embodiment with one or more features of another embodiment.

It is to be understood that not all features of the described aspects / embodiments have to be present for realizing the technical advantages provided by the present disclosure, which is defined by the subject-matter of the claims. The disclosed aspects / embodiments may be modified by combining certain features of one aspect / embodiment with one or more features of another aspect / embodiment. Specifically, the skilled person will understand that features, and / or functional elements of one aspect / embodiment can be combined with technically compatible features, and / or functional elements of any other aspect / embodiment of the present disclosure given that the resulting combination falls within the definition of the present disclosure.

While the embodiments below are described primarily with reference to an upper for a shoe, in particular a sports shoe, the skilled person will recognize that the disclosure according to the invention can equally be applied in a plurality of different technical fields and / or use cases.

Throughout the present figures and specification, the same reference numerals refer to the same elements. For the sake of clarity and conciseness, certain features, parts, elements, aspects, components and / or steps of certain embodiments are presented without undue detail where such detail would be apparent to those skilled in the art in the art in light of the teachings herein and / or where such detail would obfuscate an understanding of more pertinent aspects of the embodiments.

As understood by the skilled person and / or in order to avoid redundancies, reference is also made to the explanations in the preceding sections, which also apply to the following detailed description. Further, not all features, parts, elements, aspects, components and / or steps are expressly indicated by reference signs for the sake of brevity and clarity. This particularly applies, where the skilled person recognizes that such features, parts, elements, aspects, components and / or steps are present in a plurality.

### Definitions

The "toe portion" as used herein may comprise portions in proximity of the big toe, and / or of the big toe knuckle.

Unless otherwise stated, the term "substantial" or "substantially" as used in the present context may be understood to a great or significant extent or for the most part or essentially. In particular, manufacturing tolerances are included by this term.

The term "and / or" is only an association relationship describing associated objects and represents that three relationships may exist. For example, A and / or B may represent three conditions: i.e., independent existence of A, existence of both A and B and independent existence of B. In addition, the character "/" in the disclosure usually represents that previous and next associated objects form an "or" relationship.

The terms "bottom", "top", "one end", "the other end", "outer side", "upper", "above", "inner side", "under", "below", "horizontal", "coaxial", "central", "end" "part", "length", "outer end" etc., which indicate the orientation or positional relationship, are based on the orientation or positional relationship shown in the drawings.

The terms "upper", "above", "below", "under" and the like as used in the present invention to indicate a relative position in space are used for the purpose of facilitating explanation to describe a garment, element, part, object and / or feature shown in the drawings relative to the relationship of another garment, element, part, object and / or feature.

### Description of figures

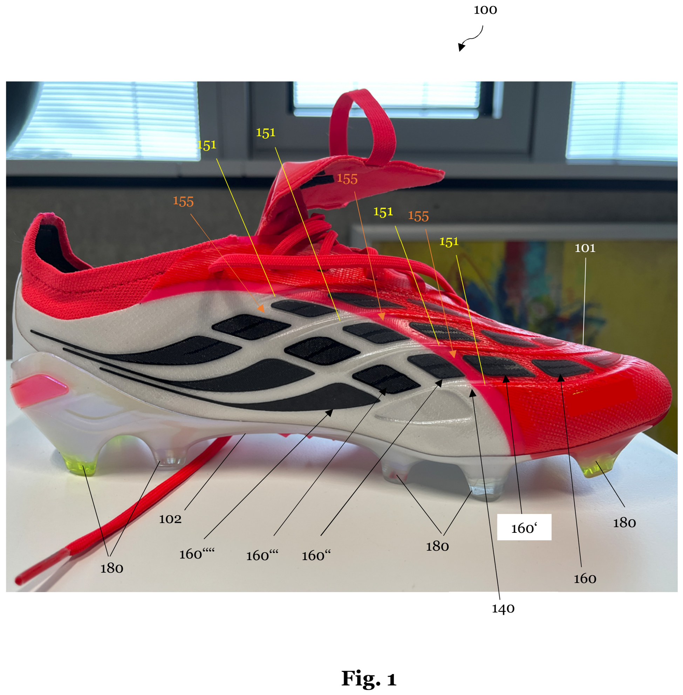

**Figs. 1 to 3** show an exemplary upper 101 for a shoe 100, in particular a sports shoe, according to an embodiment of the present disclosure.

The upper 101 comprises a ball contact area 140, comprising one or more functional elements 160, one or more guiding elements 151, wherein one or more of the one or more guiding elements 151 are arranged with respect to one or more of the one or more functional elements 160 such that at least one path 155 is formed. The path 155 may be configured to at least partially guide a ball upon contact with the ball. It is to note that reference numerals 160, 160', 160", 160'", 160ʺʺ shown in the figures may refer to different functional elements. Nonetheless, they may have the same features.

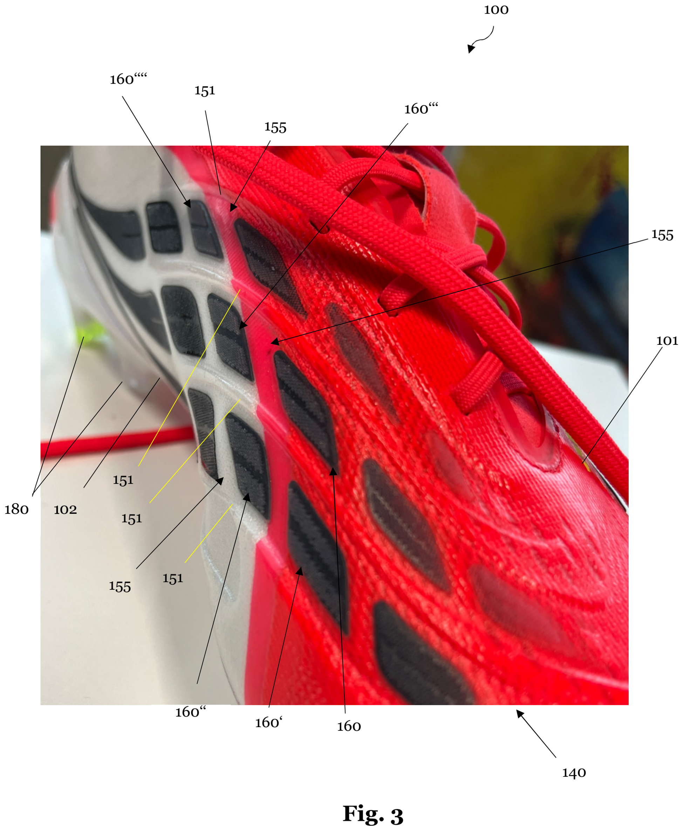

The functional elements 160 may be raised with respect to the ball contact area 140 (as best seen in **Fig. 3****),** enhancing their interaction with the ball. The guiding elements 151 may be positioned between and next to the functional elements 160. This may serve to create the paths 155.

These paths 155 may have a channel-like shape, designed to accommodate the functional elements 160 and guide the ball in a specific direction.

The guiding elements 151 and functional elements 160 may be formed integrally with the upper 101. This may be performed in a single mold and step, ensuring a seamless construction.

The one or more functional elements 160 may be configured to assist with ball control, in particular with shooting and/or passing a ball upon contact with the ball.

One or more of the guiding elements 151 may be shaped like ribs, particularly like longitudinal ribs.

The term rib 151 as used in here may be used to describe any part of an object or structure that juts out, sticks out, or extends beyond the surrounding surface or boundary. In one example, the rib 151 may be a three-dimensional extension or projection that extends outward from a surface or object. The rib 151 may be provided in various sizes. The size, shape, or the like of the rib 151 may vary depending on the intended purpose. Substantially all technically meaningful sizes and shapes may be encompassed in the present disclosure.

The rib 151 may provide a structural benefit and / or may provide for more specific functionalities, in particular in the context of cushioning. In addition, the rib 151 can contribute to the visual appearance, which could give the wearer an indication at which location a specific functionality is provided.

The one or more ribs 151 may, in some cases, adopt the shape of at least one of a ridge, a lamella, or a fin.

One or more of the guiding elements 151 may have a length that is at least 10%, preferably at least 20%, preferably at least 40%, preferably at least 60%, preferably at least 80%, preferably at least 100%, preferably at least 150%, preferably at least 200% or more of the length of a neighboring functional element 160. This may allow to guide the ball accordingly.

The height of one or more of the functional elements 160 may range from at least 0.1 mm to at most 4.0 mm, while the guiding elements 151 have a height greater than or equal to the functional elements 160, ranging from at least 0.1 mm to at most 5.0 mm.

The functional 160 and guiding 151 elements are arranged in various portions of the upper 101, including in a medial toe portion 105, a medial metatarsal portion 110, a medial distal tarsal portion 115, a lateral toe portion 120, a lateral metatarsal portion 125, a lateral distal tarsal portion 130, an intermediate toe portion, an intermediate metatarsal portion, and/or an intermediate distal tarsal portion of the upper 101.

The functional elements 160 may be spaced apart from one another by at least 1 mm, preferably at least 2 mm, preferably at least 3 mm, preferably at least 4 mm, preferably at least 5 mm, preferably at least 6 mm, preferably at least 7 mm, preferably at least 8 mm, preferably at least 9 mm, preferably at least 10 mm, and/or by at most 20 mm, preferably at most 19 mm, preferably at most 18 mm, preferably at most 17 mm, preferably at most 16 mm, preferably at most 15 mm, preferably at most 14 mm, preferably at most 13 mm, preferably at most 12 mm, preferably at most 11 mm, preferably at most 10 mm.

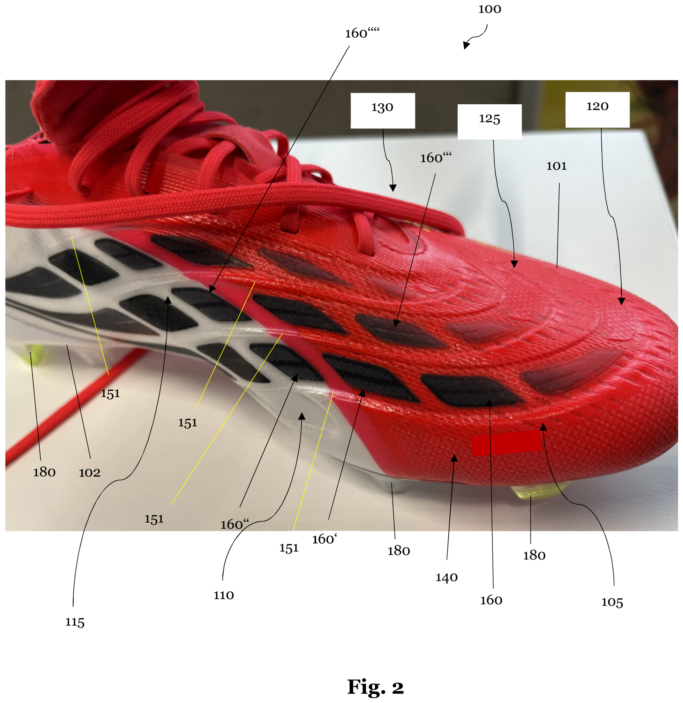

Moreover, the functional elements 160 may be arranged in predefined patterns, as seen for instance in **Fig. 2****.** Particularly, the functional elements 160 may be arranged in rows, such as one, two, three or more rows. The functional elements 160 may be arranged in a curved shape. For instance, the functional elements 160 may be arranged in an S-shape or a part of an S-shape or the like.

Further, one or more of the rows may comprise at least two, preferably at least three, preferably at least four, preferably at least five, preferably at least six functional elements 160. In the exemplary embodiment shown in Figs. 1 to 3, one or more of the rows may comprise six functional elements 160. Preferably all rows may comprise six functional elements 160.

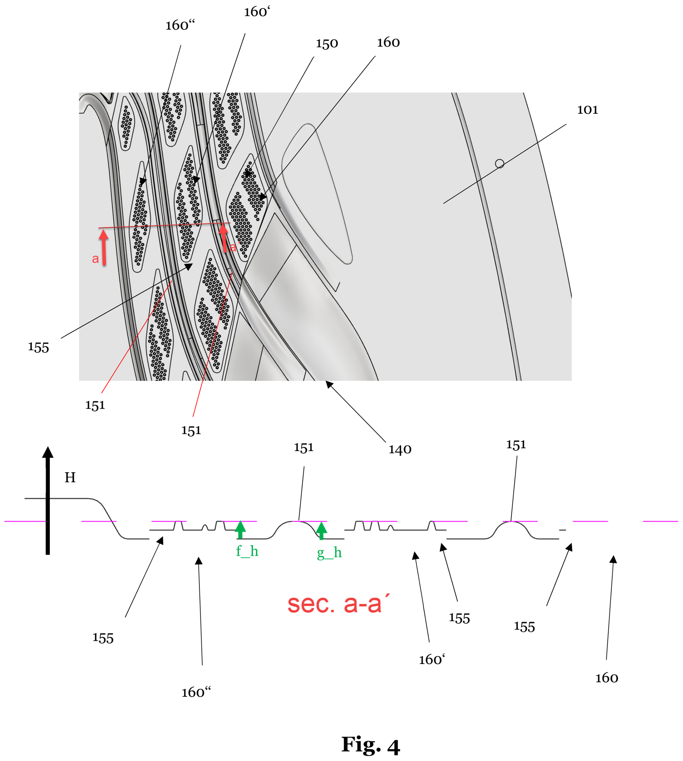

Some functional elements 160 feature a microstructure surface 150, preferably arranged on a top surface of the functional element 160 (as described below with respect to **Fig. 4****).** The microstructure surface 150 may comprise a plurality of protrusions, which are elastically bendable and assist with ball control. These protrusions may be made from materials such as thermoset elastomers or thermoplastic elastomers, with a Shore A hardness of 30 to 110 Shore A.

It is noted that the microstructure surface 150 may additionally or alternatively be arranged on a tongue of the upper 101, when present, and/or on a heel portion of the upper 101.

One or more, preferably each functional element 160 of the one or more functional elements 160 may comprise a material configured to enhance a grip between a ball and the functional element 160 upon contact.

Further, one or more, preferably each functional element 160 of the one or more functional elements 160 may comprise a thermoset elastomer, preferably rubber, in particular a super light rubber, such as polyurethane rubber, preferably polyurethane foam rubber, natural rubber, silicone rubber preferably silicone foam rubber.

Further, one or more of the one or more functional elements 160 may have essentially the shape of a diamond, parallelogram, kite, rectangle, square, trapezoid, deltoid, lozenge. Particularly, the one or more functional elements 160 depicted in **Fig. 1** may have the shape of a parallelogram.

As exemplarily indicated in **Figs. 1 to 3****,** the shoe 100 may be provided with studs 180 (merely two are indicated for brevity), which may be also referred to as cleats. These may serve to provide traction for the player on a ground, in particular soft grounds such as grass fields or the like. The use of studs is known in the field of ball sports activities, such as soccer or football (e.g., American football), rugby or the like. In some examples, the studs 180 can be integrally formed with the sole 102 of the shoe 100. The studs 180 may be at least partially injected onto a base material. In various examples, prefabricated stud tips may be placed in a mold and are over-injected with a base material. The base material may comprise portions of the sole 102. In various examples, the studs 180 may comprise TPU. Integrally formed or injected studs 180 have the advantage that no screws are needed and / or that the studs 180 do not need replacement. Nevertheless, it is also possible to apply interchangeable studs 180 or screw-on studs 180.

As already described elsewhere herein, the advantages of the embodiments disclosed in here are multifaceted.

For instance, the integration of the functional elements 160 in combination with the guiding elements 151 provides a tangible performance benefit by improving ball control during play. Moreover, it creates a dynamic and distinctive surface pattern, which improves ball control. The prior art thus far has only focused on improved grip, but the guidance of the ball upon ball contact is a major factor that influences overall ball control. By having a predetermined travel trajectory of the ball, the benefit of the functional elements comes even more into play, which is unprecedented in existing approaches.

Particularly, by having the functional elements 160 (preferably rubber elements) placed withing the paths 155 (preferably channels), the grip on the ball will be further enhanced while the ball is guided by the guiding elements 151 (preferably ribs). In other words, the guiding elements 151 guide the ball in direction to the grip elements where the grip to the ball is increased.

To further highlight the advances of the present disclosure, an analysis of the travel trajectory of a ball along the upper 101 may be helpful. The term "travel trajectory" may refer to the relative movement between the upper 101 and ball. In one example, the ball may contact the upper 101 first in a first contact portion and may move along the ball contact area 140 toward a second contact portion, where the ball last contacts the upper 101. From the second contact portion, the ball may accelerate away from the upper 101. The first contact portion may be arranged closer to a sole rim. The second contact portion may be arranged closer to an instep portion. This movement of the ball may be more or less dominant, which can depend on the type of kick. For instance, it may differ from shooting as compared to passing.

Various physical effects may take place during the travel trajectory including but not limiting to the Magnus effect. The Magnus effect may be understood as a phenomenon in fluid dynamics describing a force acting on a spinning (i.e., rotating) object, such as a ball, moving through a fluid, such as air. When a spinning ball moves through air, it may thereby experience a force perpendicular to the direction of its travel path. For short distance passing, the Magnus effect may play a less prominent factor.

**Fig. 4** shows a schematic figure of an exemplary upper, in particular of the functional elements and guiding elements of the exemplary upper along with their height profile, according to an embodiment of the present disclosure.

As can be gathered from **Fig. 4****,** one or more, preferably all functional elements 160 feature a microstructure surface 150, preferably arranged on a top surface of the functional element 160.

The microstructure surface 150 may comprise a plurality of protrusions. One or more, preferably all protrusions of the plurality of protrusions may have the shape of a pillar.

This brings a distinct geometric configuration to the protrusions, which can influence the interaction between the ball and the upper 101. The pillar-shaped protrusions can provide a more defined and consistent contact surface, potentially enhancing the control and direction of the ball when it comes into contact with the upper 101. The shape of the protrusions can also affect the durability and performance of the upper 101, as pillar-shaped structures may offer different mechanical properties compared to other shapes. This may include benefits such as increased resistance to wear and tear and/or improved energy transfer during ball contact.

Moreover, the microstructure surface 150 may be configured to assist with shooting and/or passing a ball in that each protrusion of the plurality of protrusions may be elastically bendable.

The elastic bending of one or more of the protrusions can create a cushioning effect, reducing the impact force and allowing for a smoother interaction between the ball and the shoe's upper. This can be beneficial in sports where precise ball control is helpful. Additionally, the protrusions may optimize the direction and force applied to the ball, further enhancing the player's performance. The microstructure surface 150 with elastically bendable protrusions adds functionality to the shoe's upper, making it more effective in assisting with ball-related maneuvers. This can differentiate the shoe from others by providing an added benefit in terms of ball control, which can be an advantage in competitive sports. The elastic properties of the protrusions can also contribute to the durability and/or longevity of the shoe, as they can absorb and dissipate impact forces more effectively than rigid structures.

The microstructure surface 150 may comprise a thermoset elastomer, preferably polyurethane, PU, rubber and/or silicone. Additionally or alternatively, the microstructure surface 150 comprises a thermoplastic elastomer, preferably thermoplastic polyurethane, TPU, polyamide, PA, thermoplastic polyether block amide, PEBA, and/or thermoplastic polyester elastomer, TPEE.

Moreover, each protrusion of the plurality of protrusions may comprise a Shore A hardness of 30 to 110 Shore A, preferably 50 to 100 Shore A, more preferably 70 to 90 Shore A.

Without wishing to be bound by theory, it is believed that the microstructure surface 150 proposed in here provides a force-dependent grip. Hence it may provide for an increased grip for kicking a ball, e.g., for high foot-to-ball impacts. These may occur, for instance, during shooting and/or passing of a ball. At the same time, said microstructure surface 150 provides less grip for low foot-to-ball impacts. These may occur, for instance, during dribbling, first touch and/or short distance passing.

Further, the microstructure surface 150 may provide a relatively high coefficient of friction and therefore high grip in general for kicking. Additionally, the microstructure surface may provide a relatively small deviation of the coefficient of friction during different environmental conditions, e.g., in wet conditions compared to dry conditions. Thus, a consistent grip may be achieved for both conditions. Thereby, a reduction of grip under wet conditions (which typically occurs in prior art shoes) can be avoided.

As described elsewhere herein, the microstructure surface 150 includes a plurality of protrusions, wherein one or more may be shaped like a pillar and may be elastically bendable. The arrangement and placement of these components can be meticulously designed to enhance the performance of the upper for a shoe during activities such as shooting and passing a ball.

The microstructure surface 150 described in here is to be distinguished from, e.g., prior art surfaces, which reveal macro elements, e.g., macro protrusions. These macro protrusions are believed to interfere with dribbling, which may result in the described technical problem that the present invention aims to overcome. As understood, such a microstructure surface therefore may act different than a macrostructure surface.

As described elsewhere herein, one or more functional element 160 of the one or more functional elements 160 are provided to the upper 101 as separate element(s), preferably with a vulcanization process

The vulcanization process may be as follows: a base layer is provided for the upper. At least one functional element which comprises a rubber material is connected to the outer face of the base layer. For instance, the functional element is connected to the outer face of the base layer without using a seam by means of hot pressing.

Hot pressing can be carried out such that the rubber material vulcanizes on the outer face of the base layer by means of the hot pressing. By means of the vulcanization of the rubber material, a reliable connection is created between the functional element and the base layer which is strong enough to permanently resist the large forces which arise at the upper of a football shoe.

As can be gathered from **Fig. 4****,** particularly from the height profile shown in cross-section a-a' in the lower part of **Fig. 4****,** the height g_h of one or more of the guiding elements 151 may range from at least 0.1 mm to at most 5.0 mm. The height may be measured along a direction normal to a surface of the upper, as exemplarily indicated by way of direction H in **Fig. 4****.**

As can be further gathered from **Fig. 4**, particularly from the height profile shown in cross-section a-a' in the lower part of **Fig. 4****,** the height f_h of one or more of the functional elements 160 may range from at least 0.1 mm to at most 4.0 mm.

Particularly, the guiding elements 151 may have a height g_h greater than or equal to the height f_h of the functional elements 160, ranging from at least 0.1 mm to at most 5.0 mm.

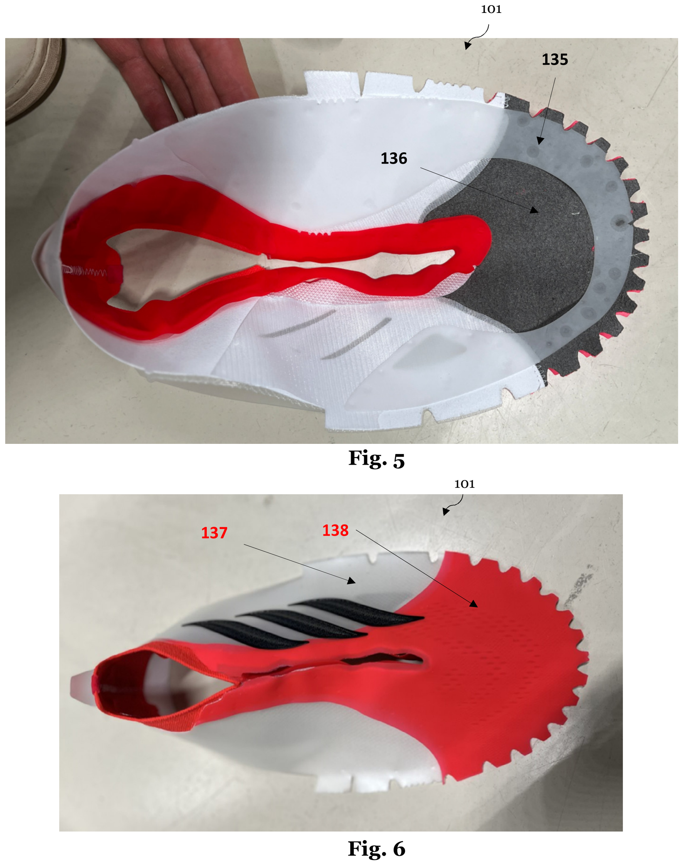

**Fig. 5** shows an exemplary upper for a shoe, in particular a sports shoe, in a not finalized state of manufacturing, according to an embodiment of the present disclosure. **Fig. 6** shows the embodiment in Fig. 5 in yet a different state of manufacturing.

The upper 101 may comprise a first layer 135, which may be an inner layer. The first layer 135 may comprise a reinforcement foil, in particular TPU foil.

The upper 101 may comprise a second layer 136, which may be arranged outside the first layer 135. The second layer 136 may comprise microfiber. Microfiber may be used to create softness on the foot facing inside of the shoe 100, particularly inside of the upper 101.

The upper 101 may comprise a third layer 137 (**Fig. 6**), which may be arranged outside the second layer 136. The third layer 137 may comprise engineered mesh.

The upper 101 may comprise a fourth layer 138, which may be arranged outside the third layer 137. The fourth layer 138 may comprise TPU foil.

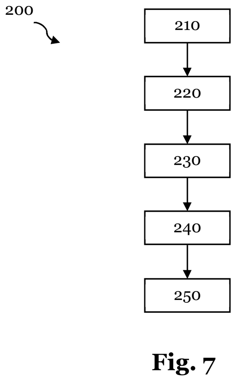

**Fig. 7** shows a flow chart of an exemplary method for manufacturing an upper for a shoe, in particular for a sports shoe, such as a soccer shoe, according to an embodiment of the present disclosure.

The method 200 comprises:
a. providing 210 a mold;
b. arranging 220 an initial upper into the mold;
c. heating 230 the mold to expose the initial upper with a heat treatment;
d. pressing 240 the initial upper at least partially to provide one or more guiding elements 151;
e. initiating 250 a vulcanization process in the mold to provide one or more functional elements 160 to form the upper 101.

Heating the mold and pressing the initial upper may be performed essentially simultaneously. Heating the mold and initiating a vulcanization may be performed essentially simultaneously. Pressing the initial upper and initiating a vulcanization may be performed essentially simultaneously. Heating the mold, pressing the initial upper, and initiating a vulcanization may be performed essentially simultaneously.

In a preferred embodiment, the method 200 comprises the step of pre-vulcanizing the functional element prior to connecting it to a base layer provided for the upper. By means of the pre-vulcanization a functional element is provided which is particularly suited for being connected to the base layer by means of hot pressing and a full vulcanization associated therewith.

In a preferred embodiment, the method 200 comprises the step of pre-heating the functional element prior to the pre-vulcanization. By means of a pre-heating prior to the pre-vulcanization an improved material structure of the functional element may be obtained. In a further embodiment, the step of pre-heating the functional element is carried out prior to the connecting to the outer face of the base layer.

In a preferred embodiment, the outer face of the base layer comprises polyurethane (PU). PU is particularly suited for a connection to a functional element according to the described methods. By means of an outer face of the base layer which comprises PU functional elements may be connected to the base layer extremely strongly and permanently.

In a preferred embodiment, the rubber material comprises a Shore-A hardness in the range of 30 - 70. This range is particularly suited for being used in a functional element for a football shoe. On the one hand, a convenient wearing comfort may be achieved since the functional element does not stiffen the upper too strongly. In addition, the functional element is elastic enough such that even for a large force transmission, e.g. for a powerful shot, no pressure marks are created on the foot. On the other hand, it has turned out that also the grip properties of the rubber material in this hardness range are very well suited for a functional element and provide a strong grip. Moreover, the rubber material in this hardness range may be connected to the base material by means of suitable hot pressing particularly well.

In a preferred embodiment the rubber material comprises a Shore-A hardness in the range of 40 - 60. In a further preferred embodiment, the rubber material comprises a Shore-A hardness of approximately 45 or 55.

These are various examples, and the specific way of manufacturing an upper 101 for a shoe 100 as described in here is not limited to these examples.

It is to note that the term integrally formed as used in here may refer to the manner in which one or more components of the sports shoe and/or the upper are manufactured as a single, unified structure. This may be performed without requiring additional joining, bonding, or assembly of separate parts. The integral formation may be particularly relevant to ensure structural cohesion, enhanced durability, and uniform performance characteristics in specific areas of the shoe, such as the upper and/or specialized design features like gripping patterns or reinforcement zones.

When a component is integrally formed, it is typically produced through a single manufacturing process, such as injection molding, 3D knitting, casting, or other similar techniques. These methods eliminate the need for seams, adhesives, or stitching to combine distinct parts. As a result, integrally formed components exhibit a seamless transition between various functional zones, ensuring consistent mechanical properties such as flexibility, elasticity, and resistance to wear. For instance, an upper that is integrally formed with a gripping pattern or raised elements means that the raised elements are not attached separately but may be directly incorporated into the upper during the manufacturing process, creating a unified structure.

Furthermore, when a component is integrally formed, it may mean that the integrally formed part retains its functionality and design integrity as a single entity. In the case of sports shoes, this could mean that a part of the upper is integrally formed with cushioning structures, or the upper is integrally formed with zones that enhance ball control, ensuring that these features do not detach, degrade, or fail independently.

In addition, integrally forming components of a sports shoe enables precise customization of material properties across different regions. For example, certain areas can be designed to be stiffer for stability while others remain flexible for comfort and movement. This approach also minimizes manufacturing complexity, reduces the weight of the shoe, and enhances its overall aesthetic by eliminating visible joints or seams.

In any one or more of the embodiments of the upper described herein, mentioning of "first", "second" or the like merely corresponds to naming of elements, parts, groups or the like. This naming is not to be construed limiting but solely serves the purpose to illustrate the present disclosure.

It is noted that any one or more of the embodiments described herein and / or examples may be combined with further aspects as described herein and details of the embodiments and / or examples may also be omitted, as will be understood by the skilled person. The scope of protection is determined by the claims and is not limited by the embodiments and / or examples disclosed in the above figures.

### 6. Further embodiments

1. An upper (101) for a shoe, in particular a sports shoe, the upper (101) comprising a ball contact area (140) comprising:
   a. one or more functional elements (160);
   b. one or more guiding elements (151);
   c. wherein one or more of the one or more guiding elements (151) are arranged with respect to one or more of the one or more functional elements (160) such that at least one path (155) is formed configured to at least partially guide a ball upon contact with the ball.
2. The upper (101) according to the preceding embodiment, wherein one or more, preferably each functional element (160) of the one or more functional elements (160) are raised with respect to the ball contact area (140).
3. The upper (101) according to any one of the preceding embodiments, wherein one of the one or more guiding elements (151) is arranged between at least two of the functional elements (160).
4. The upper (101) according to any one of the preceding embodiments, comprising two guiding elements (151) arranged next to one of the one or more functional elements (160) to form the at least one path (155).
5. The upper (101) according to any one of the preceding embodiments, wherein the at least one path (155) has a channel-like shape.
6. The upper (101) according to any one of the preceding embodiments, wherein the at least one path (155) accommodates one or more of the one or more functional elements (160).
7. The upper (101) according to any one of the preceding embodiments, wherein the at least one path (155) is configured to at least partially guide a ball in a direction in which one or more of the one or more functional elements (160) are arranged.
8. The upper (101) according to any one of the preceding embodiments, wherein one or more, preferably each functional element (160) of the one or more functional elements (160) are provided to the upper (101) as separate element(s), preferably with a vulcanization process.
9. The upper (101) according to any one of the preceding embodiments, wherein one or more, preferably each guiding element (151) of the one or more guiding elements (151) and the upper (101) are formed integrally.
10. The upper (101) according to any one of the preceding embodiments, wherein one or more, preferably each functional element (160) of the one or more functional elements (160) and one or more, preferably each guiding element (151) of the one or more guiding elements (151) are formed integrally.
11. The upper (101) according to any one of the preceding embodiments, wherein the one or more functional elements (160) and the one or more guiding elements (151) are formed in one mold, preferably in a single step.
12. The upper (101) according to any one of the preceding embodiments, wherein the one or more functional elements (160) are configured to assist with ball control, in particular with shooting and/or passing a ball upon contact with the ball.
13. The upper (101) according to any one of the preceding embodiments, wherein one or more of the one or more guiding elements (151) have the shape of ribs, preferably longitudinal ribs (151).
14. The upper (101) according to any one of the preceding embodiments, wherein one or more of the one or more guiding elements (151) has a length substantially perpendicularly to a height, the length being along a surface of the upper (101),
   wherein the length is at least 20%, preferably at least 40%, preferably at least 60%, preferably at least 80%, preferably at least 100%, preferably at least 150%, preferably at least 200% or more of the length of a neighboring functional element (160).
15. The upper (101) according to any one of the preceding embodiments, wherein one or more, preferably each functional element (160) of the one or more functional elements (160) has a height of at least 0.1 mm, preferably at least 0.2 mm, preferably at least 0.3 mm, preferably at least 0.4 mm; and/or
   of at most 4.0 mm, preferably at most 3.5 mm, preferably at most 3.0 mm, preferably at most 2.5 mm.
16. The upper (101) according to any one of the preceding embodiments, wherein one or more, preferably each guiding element (151) of the one or more guiding elements (151) has a height that is greater than or equal to a height of the one or more functional elements (160).
17. The upper (101) according to any one of the preceding embodiments, wherein one or more, preferably each guiding element (151) of the one or more guiding elements (151) has a height of at least 0.1 mm, preferably at least 0.2 mm, preferably at least 0.3 mm, preferably at least 0.4 mm; and/or
   of at most 5.0 mm, preferably at most 4.5 mm, preferably at most 4.0 mm, preferably at most 3.5 mm.
18. The upper (101) according to any one of the preceding embodiments, wherein the one or more functional elements (160) and/or the one or more guiding elements (151) are arranged at least partially:
   in a medial toe portion (105), a medial metatarsal portion (110), a medial distal tarsal portion (115), a lateral toe portion (120), a lateral metatarsal portion (125), a lateral distal tarsal portion (130), an intermediate toe portion, an intermediate metatarsal portion, and/or an intermediate distal tarsal portion of the upper (101).
19. The upper (101) according to any one of the preceding embodiments, wherein the one or more functional elements (160) comprise two neighboring functional elements (160) spaced apart from one another by at least 1 mm, preferably at least 2 mm, preferably at least 3 mm, preferably at least 4 mm, preferably at least 5 mm, preferably at least 6 mm, preferably at least 7 mm, preferably at least 8 mm, preferably at least 9 mm, preferably at least 10 mm, and/or
   by at most 20 mm, preferably at most 19 mm, preferably at most 18 mm, preferably at most 17 mm, preferably at most 16 mm, preferably at most 15 mm, preferably at most 14 mm, preferably at most 13 mm, preferably at most 12 mm, preferably at most 11 mm, preferably at most 10 mm.
20. The upper (101) according to any one of the preceding embodiments, wherein the functional elements (160) are arranged in a predefined pattern.
21. The upper (101) according to the preceding embodiment, wherein the functional elements (160) are arranged in one, two, preferably three rows.
22. The upper (101) according to the preceding embodiment, wherein one or more of the rows comprise at least two, preferably at least three, preferably at least four, preferably at least five, preferably at least six functional elements (160).
23. The upper (101) according to embodiment 21 or 22, wherein one or more of the rows have a curved shape.
24. The upper (101) according to any one of the preceding embodiments, wherein one or more of the one or more functional elements (160) comprises a microstructure surface (150), preferably arranged on a top surface of the functional element (160).
25. The upper (101) according to the preceding embodiment, wherein the microstructure surface (150) comprises a plurality of protrusions.
26. The upper (101) according to the preceding embodiment, wherein the microstructure surface (150) is configured to assist with shooting and/or passing a ball in that each protrusion of the plurality of protrusions is elastically bendable.
27. The upper (101) according to embodiment 25 or 26, wherein each protrusion of the plurality of protrusions has the shape of a pillar.
28. The upper (101) according to any one of the preceding embodiments 24 to 27, wherein the microstructure surface (150) comprises a thermoset elastomer, preferably polyurethane, PU, rubber and/or silicone; and/or
   wherein the microstructure surface (150) comprises a thermoplastic elastomer, preferably thermoplastic polyurethane, TPU, polyamide, PA, thermoplastic polyether block amide, PEBA, and/or thermoplastic polyester elastomer, TPEE.
29. The upper (101) according to any one of the preceding embodiments 25 to 28, wherein each protrusion of the plurality of protrusions comprises a Shore A hardness of 30 to 110 Shore A, preferably 50 to 100 Shore A, more preferably 70 to 90 Shore A.
30. The upper (101) according to any one of the preceding embodiments, wherein one or more, preferably each functional element (160) of the one or more functional elements (160) comprises a material configured to enhance a grip between a ball and the functional element (160) upon contact.
31. The upper (101) according to any one of the preceding embodiments, wherein one or more, preferably each functional element (160) of the one or more functional elements (160) comprises a thermoset elastomer, preferably rubber, in particular a super light rubber, such as polyurethane rubber, preferably polyurethane foam rubber, natural rubber, silicone rubber preferably silicone foam rubber.
32. The upper (101) according to any one of the preceding embodiments, wherein one or more of the one or more functional elements (160) has essentially the shape of a diamond, parallelogram, kite, rectangle, square, trapezoid, deltoid, lozenge.
33. A shoe (100), in particular a sports shoe, the shoe (100, 200, 300) comprising:
   an upper (101) according to one of embodiments 1 to 32; and
   a sole (102) attached to the upper (101).
34. A method (200) for manufacturing an upper (101) for a shoe, in particular for a sports shoe, such as a soccer shoe, the method (200) comprising:
   a. providing (210) a mold;
   b. arranging (220) an initial upper into the mold;
   c. heating (230) the mold to expose the initial upper with a heat treatment;
   d. pressing (240) the initial upper at least partially to provide one or more guiding elements (151);
   e. initiating (250) a vulcanization process in the mold to provide one or more functional elements (160) to form the upper (101).
35. The method (200) according to embodiment 34, wherein the steps c and d, c and e, d and e, or c, d and e are performed essentially simultaneously.
36. The method (200) according to embodiment 34 or 35, wherein the upper is an upper according to one of embodiments 1-32.
37. An upper (101) for a shoe, in particular for a sports shoe, such as a soccer shoe, the upper (101) being manufactured according to the method (200) of one of the embodiments 34 to 36.

### 7. List of reference signs used

- 100: shoe
- 101: upper
- 102: sole
- 105: medial toe portion
- 110: medial metatarsal portion
- 115: medial distal tarsal portion
- 120: lateral toe portion
- 125: lateral metatarsal portion
- 130: lateral distal tarsal portion
- 135: first layer
- 136: second layer
- 137: third layer
- 138: fourth layer
- 140: ball contact area
- 150: microstructure surface
- 151: guiding element
- 155: channel
- 160: functional element
- 160': functional element
- 160": functional element
- 160‴: functional element
- 160ʺʺ: functional element
- 180: stud
- 200: method for manufacturing an upper for a shoe
- 210: providing a mold
- 220: arranging
- 230: heating
- 240: pressing
- 250: initiating
- g_h: height of guiding element
- f_h: height of functional element
- H: height direction

## Claims

1. An upper (101) for a shoe, in particular a sports shoe, the upper (101) comprising a ball contact area (140) comprising:
a. one or more functional elements (160);
b. one or more guiding elements (151);
c. wherein one or more of the one or more guiding elements (151) are arranged with respect to one or more of the one or more functional elements (160) such that at least one path (155) is formed configured to at least partially guide a ball upon contact with the ball.

2. The upper (101) according to the preceding claim, wherein one or more, preferably each functional element (160) of the one or more functional elements (160) are raised with respect to the ball contact area (140).

3. The upper (101) according to any one of the preceding claims, wherein one of the one or more guiding elements (151) is arranged between at least two of the functional elements (160).

4. The upper (101) according to any one of the preceding claims, comprising two guiding elements (151) arranged next to one of the one or more functional elements (160) to form the at least one path (155).

5. The upper (101) according to any one of the preceding claims, wherein the at least one path (155) accommodates one or more of the one or more functional elements (160).

6. The upper (101) according to any one of the preceding claims, wherein one or more of the one or more guiding elements (151) have the shape of ribs, preferably longitudinal ribs (151).

7. The upper (101) according to any one of the preceding claims, wherein one or more, preferably each guiding element (151) of the one or more guiding elements (151) has a height that is greater than or equal to a height of the one or more functional elements (160).

8. The upper (101) according to any one of the preceding claims, wherein the functional elements (160) are arranged in a predefined pattern.

9. The upper (101) according to the preceding claim, wherein the functional elements (160) are arranged in one, two, preferably three rows.

10. The upper (101) according to the preceding claim, wherein the microstructure surface (150) comprises a plurality of protrusions.

11. The upper (101) according to claim 10, wherein each protrusion of the plurality of protrusions has the shape of a pillar.

12. A shoe (100), in particular a sports shoe, the shoe (100, 200, 300) comprising:
an upper (101) according to one of claims 1 to 11; and
a sole (102) attached to the upper (101).

13. A method (200) for manufacturing an upper (101) for a shoe, in particular for a sports shoe, such as a soccer shoe, the method (200) comprising:
a. providing (210) a mold;
b. arranging (220) an initial upper into the mold;
c. heating (230) the mold to expose the initial upper with a heat treatment;
d. pressing (240) the initial upper at least partially to provide one or more guiding elements (151);
e. initiating (250) a vulcanization process in the mold to provide one or more functional elements (160) to form the upper (101).

14. The method (200) according to claim 13, wherein the upper is an upper according to one of claims 1 to 11.

15. An upper (101) for a shoe, in particular for a sports shoe, such as a soccer shoe, the upper (101) being manufactured according to the method (200) of claim 13 or 14.
